# EUROPEAN PATENT APPLICATION

(11) **EP 1 329 826 A1**
(43) Date of publication of application: **23.07.2003**
(21) Application number: 01974882.1
(22) Date of filing: 16.10.2001
(51) Int. Cl.: G06F 17/60, G06F 13/00

(54) **INFORMATION DISTRIBUTION DEVICE, INFORMATION DISTRIBUTION SYSTEM, AND INFORMATION DISTRIBUTION METHOD**

(30) Priority: 17.10.2000 JP 2000316493
(71) Applicant: Sony Corporation, Tokyo 141-0001 (JP)
(72) Inventor: MATSUZAKI, Atsushi, c/o SONY CORPORATION, Tokyo 141-0001 (JP)
(74) Representative: Körber, Martin, Dipl.-Phys.
(86) International application number: JP0109080
(87) International publication number: WO02033613

(57) **Abstract**

An information provision system, an information distributing apparatus, and an information providing method capable of quickly providing a relatively large volume of content data to a portable type information terminal without using wireless signals are provided. The apparatus has a portable information terminal which is provided with an infrared transmission and reception unit capable of transmitting and receiving data without contact by an optical signal and a storage device storing data to be transmitted and the received data and has an information distributing apparatus which is provided with an infrared transmission and reception unit capable of transmitting and receiving the data with the infrared transmission and reception unit of the portable information terminal and a storage device storing content data received through a network and providing the content data in accordance with a request from the portable information terminal.

## Description

### TECHNICAL FIELD

The present invention relates to an information distributing apparatus, information distribution system, and information distribution method for providing content data obtained by digitizing content of for example newspapers or magazines.

### BACKGROUND ART

At present, in order to receive an Internet connection service using a mobile phone, it is necessary to connect it to a usual telephone line. Further, even when reading a relatively large volume of data into a storage device of a portable information terminal such as a notebook type personal computer or a PDA (personal data assistant) through the Internet, it is necessary to use a PHS (Personal HandyPhone System) or other mobile phone to connect to the telephone line.

The communication speed of telephone lines at the present is 128 kbps (kilobits per second) even at the maximum. If trying to transfer a file of a size of for example 10 MB (megabytes) through a telephone line, a time of 10 or so minutes is necessary at the shortest. In order to stably receive the file, it is necessary to wait at the same place for ten or so minutes. This is very inconvenient. It is difficult in a public location and the communication charge increases. Further, usage of a mobile phone generating electromagnetic waves in a crowd is not preferred since the possibility of a malfunction of a pacemaker of the heart is pointed out.

On the other hand, if utilizing an Internet service provided by for example a cable TV (CATV) line laid in the home, high speed data communication is possible, but this can be utilized only in the service zone of the cable TV, so is inconvenient.

### DISCLOSURE OF THE INVENTION

The present invention was made in consideration with the above problem and has as an object thereof to provide an information distribution system, information distributing apparatus, and information distribution method capable of quickly providing a relatively large volume of content data to a portable information terminal without usage of a wireless signal.

An information distributing apparatus of the present invention has a data transmitting and receiving means capable of transmitting and receiving data with a portable information terminal carried by an information requester desiring the provision of content data, a content data storing means for storing providable content data in advance, a black customer list storing means for storing black customer list information for stopping the provision of the content data in advance, and a processing means for comparing user information acquired from the portable information terminal with the black customer list information, providing requested content data to the portable information terminal through the data transmitting and receiving means when it is decided that there is no information coinciding with the user information in the black customer list information, checking the user specified by the user information based on check information from the outside after providing the content data, and adding the user information to the black customer list information when a negative check result is obtained for the user specified by the user information.

An information distribution system according to a first aspect of the present invention has a portable information terminal which is provided with a data transmitting and receiving means capable of transmitting and receiving data without contact by an optical signal and a storing means for storing the data to be transmitted and the received data and with data distributing apparatus provided with a data transmitting and receiving means capable of transmitting and receiving data with the data transmitting and receiving means of the portable information terminal and a storing means for storing the content data received through a network and provides content data in accordance with a request from the portable information terminal.

Preferably, the data transmitting and receiving means of the portable information terminal and the information distributing apparatus transmit and receive the data by an infrared signal.

The portable information terminal may also be configured further provided with a wireless communicating means capable of accessing a network via a telephone line.

The data transmitting and receiving means of the portable information terminal can receive the data at a higher speed than the wireless communicating means.

The data transmitting and receiving means of the portable information terminal can be attached to and detached from the body of the portable information terminal.

An information distribution system according to a second aspect of the present invention is an information distribution system having at least one information distributing apparatus provided with a data transmitting and receiving means for transmitting and receiving data with a data transmitting and receiving means of a portable information terminal provided with a data transmitting and receiving means for transmitting and receiving data and a storing means for storing the data to be transmitted and received data and a content data storing means for storing the content data in advance and providing content data requested from the portable information terminal through the data transmitting and receiving means, wherein the information distributing apparatus has a black customer list storing means for storing in advance black customer list information for which the content data should not be provided and a processing means for comparing user information acquired from the information requester with the black customer list information, providing requested content data to the portable information terminal through the data transmitting and receiving means when it is decided that there is no information coinciding with the user information in the black customer list information, checking the user specified by the user information based on check information from the outside after providing the content data, and adding the user information to the black customer list information when a negative check result is obtained for the user specified by the user information.

An information distribution method of the present invention is an information distribution method for providing the related content data to the portable information terminal from the information distributing apparatus holding the content data in advance, comprised of a step of having the information distributing apparatus acquire a request of provision from a portable information terminal carried by an information requester desiring provision of the content data and user information, a step of comparing the acquired user information with black customer list information stored in advance in the information distributing apparatus prepared to which the content data should not be provided, a step of providing the requested content data to the portable information terminal by the information distributing apparatus when it is decided that there is no information coinciding with the user information in the black customer list information, a step of checking whether or not the user specified by the user information is a legitimate user by the information distributing apparatus after providing the content data, and a step of adding the user information to the black customer list information by the information distributing apparatus when a negative check result is obtained.

In the present invention, when there is a request for content data from the portable information terminal to the information distributing apparatus by an optical signal, the information distributing apparatus acquires it through the network and transmits the content data stored in advance to the portable information terminal by the optical signal. For this reason, the information distributing apparatus transmits the content data to the portable information terminal without accessing the network.

Further, in the present invention, the information distributing apparatus holds a black customer list to which the content data is not to be provided and, when there is a request of provision of the content data from the portable information terminal, provides the content data by just performing a simple authentication procedure for confirming that the acquired user information does not exist in the black customer list information. Detailed authentication is carried out by accessing the network after provision of the content data.

### BRIEF DESCRIPTION OF THE DRAWINGS

FIG. 1 is a view of the schematic configuration of an information distribution system according to a first embodiment of the present invention.
FIG. 2 is a view of an example of the concrete configuration of an information distributing apparatus 2.
FIG. 3 is a view of an example of the concrete configuration of a portable information terminal 50.
FIG. 4 is a timing chart from transmission of the name of desired information for specifying the content data to be acquired from the portable information terminal 50 to the information distributing apparatus 2 to when the desired content data is acquired.
FIG. 5 is a view of the configuration of the information distribution system according to a second embodiment of the present invention.
FIG. 6 is a timing chart of an example of communication between the information distributing apparatus 2 and the portable information terminal 50 in an information distribution system 200.
FIG. 7 is a flow chart of an example of processing carried out in the information distributing apparatus 2.
FIG. 8 is a flow chart of another example of the processing carried out in the information distributing apparatus 2.

### BEST MODE FOR WORKING THE INVENTION

Below, an explanation will be made of embodiments of the present invention by referring to the drawings.

### First Embodiment

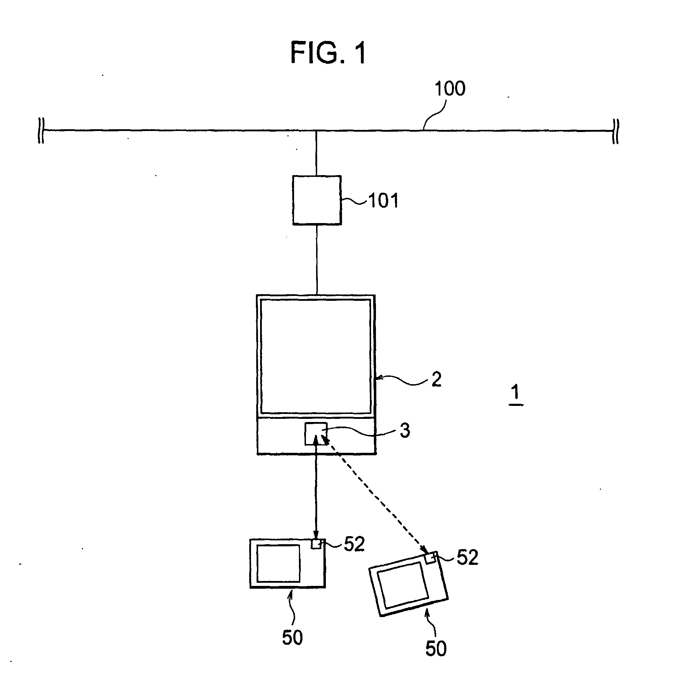

FIG. 1 is a view of the schematic configuration of an information distribution system according to a first embodiment of the present invention.

In FIG. 1, an information distribution system 1 according to the present embodiment is comprised of an information distributing apparatus 2 and a portable information terminal 50.

The information distributing apparatus 2 is provided with an infrared transmission and reception unit 3 which is connected to the Internet 100 via a firewall 101 and performs transmits and receives data with a portable information terminal 50. The firewall 101 is provided for prohibiting illegitimate access to the information distributing apparatus 2 through the Internet 100.

This information distributing apparatus 2 acquires various content data through the Internet 100 and stores this and can transmit the content data through the infrared transmission and reception unit 3 to the portable information terminal 50 in accordance with a request from the portable information terminal 50.

Data is transmitted and received between the information distributing apparatus 2 and the portable information terminal 50 by the infrared transmission and reception unit 3 of the information distributing apparatus 2 and an infrared transmission and reception unit 52 of the portable information terminal 50.

The infrared transmission and reception unit 3 and the infrared transmission and reception unit 52 transmit data by emitting pulse-like optical signals using infrared ray emission diodes and convert the received pulse-like optical signals to electric signals by using photo transistor diodes.

A data transmission speed between the infrared transmission and reception unit 3 and the infrared transmission and reception unit 52 of 100 Mbps (megabits per second) can be realized if the distance is short, for example, a few meters to 10 odd meters when using recent infrared space transmission technology. An extremely higher speed data transmission than the transmission speed of data in a usual telephone line can be realized.

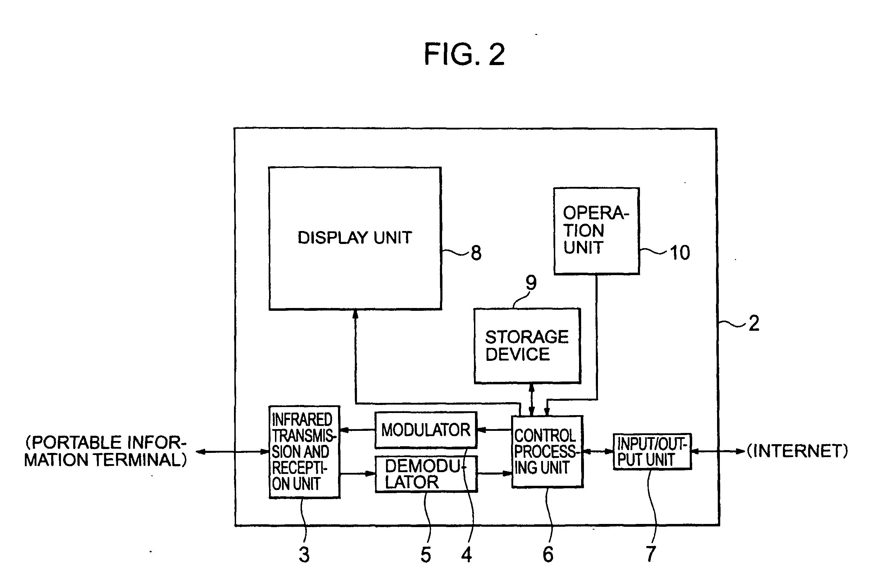

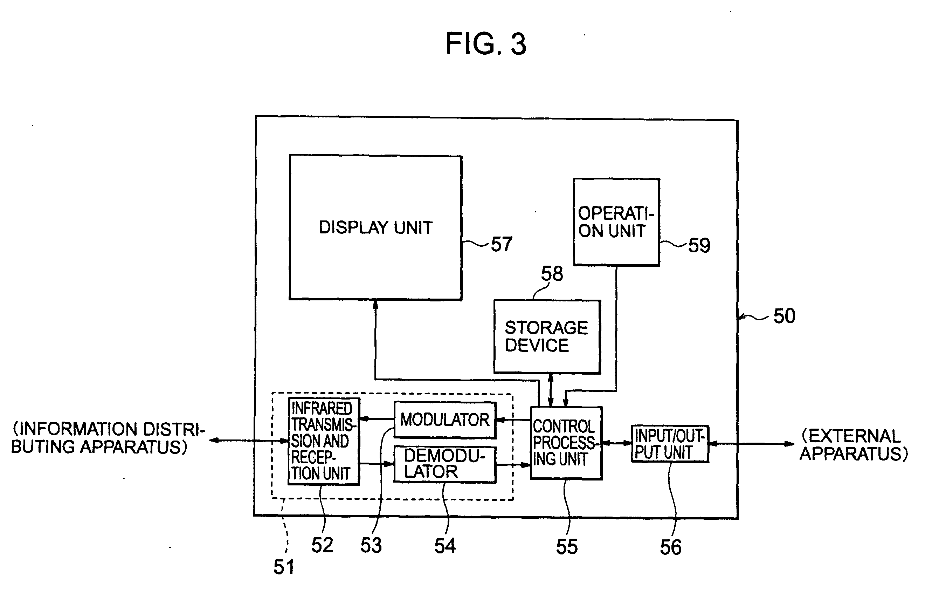

Here, FIG. 2 is a view of an example of the concrete configuration of the above information distributing apparatus 2, while FIG. 3 is a view of an example of the concrete configuration of the portable information terminal 50.

As shown in FIG. 2, the information distributing apparatus 2 is provided with an infrared transmission and reception unit 3, modulator 4, demodulator 5, control processing unit 6, input/output unit 7, display unit 8, storage device 9, and operation unit 10.

The infrared transmission and reception unit 3 is basically comprised of an infrared ray emission diode and photo transistor diode for transmitting data by using a pulse-like optical signal without contact with the portable information terminal 50 as described above.

The infrared transmission and reception unit 3 provided in the information distributing apparatus 2 is comprised so that the infrared transmission and reception unit 52 of the portable information terminal 50 can transmit optical signals from various different positions and directions as shown in FIG. 1.

Further, it is also possible to employ a configuration wherein the optical signal from the portable information terminal 50 is searched while always changing the reception direction of the infrared transmission and reception unit 3 and the data is transmitted to the direction receiving the optical signal. By employing such a configuration, even in a case where a plurality of portable information terminals 50 simultaneously access the information distributing apparatus 2 from different directions, data can be transmitted and received with just one portable information terminal 50.

The modulator 4 modulates the data to be transmitted from the infrared transmission and reception unit 3 toward the portable information terminal 50 by a method determined in advance and outputs the same to the infrared transmission and reception unit 3.

The demodulator 5 demodulates the optical signal received by the infrared transmission and reception unit 3 by the method determined in advance and outputs the same to the control processing unit 6.

The control processing unit 6 comprehensively controls the information distributing apparatus 2 and performs various types of data processing. Specifically, it manages the data transmitted and received through the infrared transmission and reception unit 3 and controls the storage device 9, the display unit 8, etc. Further, it controls the information distributing apparatus 2 in accordance with the data input from the operation unit 10.

The input/output unit 7 is connected to the Internet 100 and fetches various data input from the outside of the information distributing apparatus 2 through the Internet 100 into the information distributing apparatus 2. Further, it can output the data inside the information distributing apparatus 2 to the outside through the Internet 100.

The display unit 8 displays various data such as text data and image data. The display unit 8 is comprised of a display device such as a liquid crystal display device or CRT (cathode ray tube).

Specifically, the display unit 8 displays the content data provided by the information distributing apparatus 2 and displays the operation method of the information distributing apparatus 2 for a person desiring to obtain this content data.

The storage device 9 stores various data required for the information distributing apparatus 2 and programs and stores various content data obtained through the Internet 100. This storage device 9 is comprised of for example a hard disk drive or semiconductor memory. The content data are various data, for example, site information on the Internet, data obtained by digitizing the content of newspapers, magazines, etc., music information, and games.

The operation unit 10 is for inputting various data required for the information distributing apparatus 2 from the outside. This operation unit 10 can be comprised of a device such as keyboard or touch panel provided in the information distributing apparatus 2.

As shown in FIG. 3, the portable information terminal 50 is provided with the infrared transmission and reception unit 52, modulator 53, demodulator 54, control processing unit 55, input/output unit 56, display unit 57, storage device 58, and operation unit 59.

The infrared transmission and reception unit 52 is basically comprised of an infrared ray emission diode and photo transistor diode for transmitting data by using a pulse-like optical signal without contact with the information distributing apparatus 2 described above.

The modulator 53 modulates the data to be transmitted from the infrared transmission and reception unit 52 toward the information distributing apparatus 2 by a method determined in advance and outputs the same to the infrared transmission and reception unit 52.

The demodulator 54 demodulates the optical signal received by the infrared transmission and reception unit 52 by the method determined in advance and outputs the same to the control processing unit 55.

The infrared transmission and reception unit 52, modulator 53, and demodulator 54 can be installed in the body of the portable information terminal 50 too. It is also possible to employ a configuration wherein the infrared transmission and reception unit 52, modulator 53, and demodulator 54 are detachably connected to the body of the portable information terminal 50 as an infrared transmission and reception adapter 51. By employing the configuration of detachably connecting the infrared transmission and reception adapter 51 in this way, when for example a notebook type personal computer or PDA is assumed as the portable information terminal 50, when the infrared transmission and reception adapter 51 is connected to the already existing notebook type personal computer or PDA, transmission and reception of data by infrared rays with the information distributing apparatus 2 become possible.

The control processing unit 55 comprehensively controls the portable information terminal 50 and performs various data processing. Specifically, it manages the data transmitted and received through the infrared transmission and reception unit 52 and controls various devices such as the storage device 58 and the display unit 57. Further, it controls the portable information terminal 50 in accordance with the data input from the operation unit 59.

The input/output unit 58 is connected to an external apparatus and fetches various data from the outside of the portable information terminal 50 into the portable information terminal 50. Further, the data inside the portable information terminal 50 can be output to an external apparatus. When a notebook type personal computer or PDA is assumed as the portable information terminal 50, the external apparatus is for example a mobile phone. The configuration of accessing the Internet via a telephone line by wireless communication can be achieved by connecting the mobile phone to the input/output unit 56. When a mobile phone is assumed as the portable information terminal 50, the input/output unit 56 can be used as a wireless communication unit. In this way, the portable information terminal 50 can transmit and receive data with the outside through a usual telephone line in addition to the infrared transmission and reception unit 52.

The display unit 57 displays various data such as text data and image data. The display unit 57 is comprised of for example an LCD device.

Specifically, the display unit 57 displays the content data received from the information distributing apparatus 2 through the infrared transmission and reception unit 52.

The storage device 58 stores various data required for the portable information terminal 50 and programs and stores various content data obtained from the information distributing apparatus 2. The storage device 58 is comprised of for example a hard disk device or semiconductor memory. The content data is various information, for example, site information on the Internet and data obtained by digitizing the content of newspapers, magazines, etc.

The operation unit 59 is for inputting various data required for the portable information terminal 50 from the outside. This operation unit 59 can be comprised of a device such as a keyboard or mouse.

Next, an explanation will be given of an example of the information provision from the information distributing apparatus 2 to the portable information terminal 50 in the information distribution system 1 having the above configuration.

The information distributing apparatus 2 is placed at a public location which everyone can easily access, for example, a platform of a station or a corner of a shopping street. At the information distributing apparatus 2 disposed at such a location, various content data is obtained through the Internet 100 in advance and stored in the storage device 9.

The content data is displayed on the display unit 8 of the information distributing apparatus 2 by a mode similar to the display of magazines, newspapers, and other products at kiosks of a station.

On the other hand, the person who desires to acquire content data carrying the portable information terminal 50 goes close to the information distributing apparatus 2, operates the operation unit 59 of the portable information terminal 50, and inputs the name of the desired information for specifying the content data to be acquired.

After inputting the name of the desired information to the portable information terminal 50, by the operation by the operation unit 59 of the portable information terminal 50, the person transmits the name of the desired information to the information distributing apparatus 2.

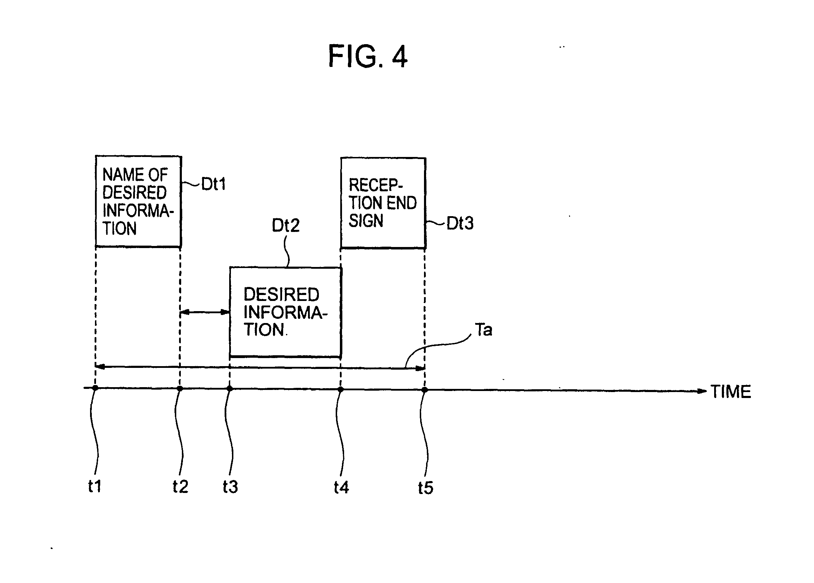

FIG. 4 is a timing chart from the transmission of the name of the desired information for specifying the content data to be acquired from the portable information terminal 50 to the information distributing apparatus 2 to when the desired content data is acquired.

At a point of time t1 shown in FIG. 4, if the name of the desired information Dt1 is transmitted to the information distributing apparatus 2, the name of this information is completed at a point of time t2.

In the information distributing apparatus 2, when the name of the information Dt1 finishes being received at the point of time t2, the content data corresponding to the name of the information is found from the content data stored in the storage device 9 and preparations made for transmitting this content data to the portable information terminal 50.

At the completion of the preparation of transmission at a point of time t3, the information distributing apparatus 2 transmits content data Dt2 as the desired information to the portable information terminal 50.

At the same time as the completion of the transmission of the content data Dt2 to the portable information terminal 50 at a point of time t4, a reception end sign Dt3 is transmitted to the information distributing apparatus 2 at the portable information terminal 50.

When the information distributing apparatus 2 finishes receiving the reception end sign Dt3 at a point of time t5, the content data finishes being provided from the information distributing apparatus 2 to the portable information terminal 50.

The present embodiment was configured to communicate between the information distributing apparatus 2 and the portable information terminal 50 by infrared transmission and reception units 3 and 52, so, as explained above, if the current infrared transmission technique is used, the data transmission speed from the information distributing apparatus 2 to the portable information terminal 50 can be easily set to a high speed of for example 100 Mbps (megabits per second).

Accordingly, when assuming that the capacity of the content data Dt2 to be transmitted from the information distributing apparatus 2 to the portable information terminal 50 is for example 10 Mb (megabytes), even if considering error correction of the data transmitted and received between the information distributing apparatus 2 and the portable information terminal 50 and the read speed of the content data from the storage device 9 of the information distributing apparatus 2, the time Ta required from the point of time t1 when the name of the desired information Dt1 shown in FIG. 4 was transmitted to the information distributing apparatus 2 to the point of time t5 when the information distributing apparatus 2 finishes receiving the reception end sign Dt3 is about one second, so reception of the content data in a short time incomparable with the case of usage of a usual telephone line becomes possible.

Further, according to the present embodiment, the content data to be provided is stored in the information distributing apparatus 2 in advance, so the information distributing apparatus 2 does not have to access the Internet 100 for acquiring the information and quick provision of the content data becomes possible.

Further, according to the present embodiment, by employing a configuration connecting a mobile phone to the portable information terminal 50 or providing the portable information terminal 50 with the function of a mobile phone, a relatively large volume of content data is acquired from the information distributing apparatus 2 and a relatively small size of data is acquired from the mobile phone function, that is, separate use becomes possible, so the user friendliness of the portable information terminal can be remarkably improved.

Further, in the present embodiment, even in a case where a plurality of portable information terminals 50 simultaneously access the same information distributing apparatus 2, the information distributing apparatus 2 does not communicate with other portable information terminals 50 until communication is completed with one portable information terminal 50. Therefore, congestion of information does not occur and inconveniences such as leakage of information and communication failure do not easily occur.

### Second Embodiment

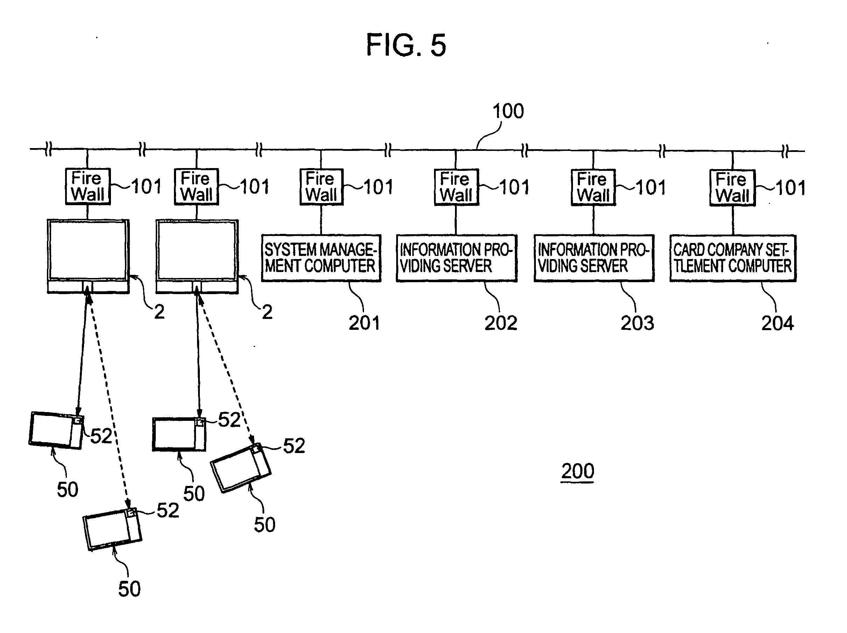

FIG. 5 is a view of the configuration of an information distribution system according to a second embodiment of the present invention. Note that components similar to those of the above embodiment are assigned the same references.

The information distribution system shown in FIG. 5 is a system capable of charging in accordance with the provided content data, which is comprised of a plurality of information distributing apparatuses 2 which are connected to the Internet 100 via a firewall 101 and can communicate with each other, a system management computer 201, a plurality of information provision servers 201, a card company settlement computer 203, and portable information terminals 50.

The portable information terminals 50 and the information distributing apparatus 2 have hardware configurations similar to those of the above embodiment.

The information distributing apparatus 2 provides the content data stored in the storage device 9 in advance in accordance with a request from the portable information terminal 50 and, at the same time, charges a price in accordance with the provided content data. Namely, the information distributing apparatus 2 provides the content data for a fee.

At this time, the information distributing apparatus 2 must authenticate if this user is the legitimate user from the user information acquired from the person who desires to acquire the information. The information distributing apparatus 2 stores and holds black customer list information for this authentication in the storage device 9. A black customer list is a list of illegitimate users who acquired content data by illegitimate means in the past and defaulters of payment, that is, persons to whom the content data should not be provided. Note that the authentication method will be explained later.

The portable information terminal 50 transmits the name of the information to be purchased when purchasing content data from the information distributing apparatus 2, user information such as the card number of the user for settlement by credit card, the expiration date of the card, and the password to the information distributing apparatus 2.

The system management computer 201 is for managing the information distributing apparatuses 2 connected to the Internet 100. Specifically, it centrally manages the information of customers to whom the information distributing apparatus 2 provided content. Namely, it manages data of the customers who legitimately purchased content data by this information distribution system in the past.

Further, the system management computer 201 obtains the black customer information from each information distributing apparatus 2, transmits this black customer information to other information distributing apparatuses 2, and maintains the black customer list information held by the managed information distributing apparatuses 2.

Further, the system management computer 201 transmits advertisement information to be added to the content data to be provided by the information distributing apparatuses 2 to each information distributing apparatus 2.

The system management computer 201 can employ various formats for the method of transmission of the advertisement information, for example, it sometimes transmits the same advertisement information to the information distributing apparatuses 2, transmits different advertisement information for every area where a large number of information distributing apparatuses 2 are disposed over a wide range, does not transmit the advertisement information according to each information distributing apparatus 2, or selects the content data to which the advertisement information is to be added.

The information provision servers 202 and 203 transmit various types of content data for sale by the information distributing apparatuses 2 to the customers to the information distributing apparatuses 2.

The information provision servers 202 and 203 can add various advertisement information to the content data to be transmitted to the information distributing apparatuses 2 similar to the system management computer 201.

The card company settlement computer 203 receives the information of the fee charged in accordance with the content data sold by each information distributing apparatus 2 and the information of the purchaser (user) transmitted from the information distributing apparatuses 2 and performs settlement work such as collection of fees from the account of the purchaser (user) from this information.

The card company settlement computer 203 checks if the related purchaser is recorded on a so-called black list from the purchaser information and sends back this check information to the information distributing apparatus 2 which transmitted the purchaser information.

Next, an explanation will be made of an example of access to the information distributing apparatus 2 from the portable information terminal 50 in the information distribution system 200 having the above configuration.

First, the person who desires to purchase content data carrying the portable information terminal 50 goes close to the information distributing apparatus 2, operates the operation unit 59 of the portable information terminal 50, and inputs the name of the purchase information for specifying the content data to be purchased. Then, the person inputs the card number of the credit card of the credit card company for payment for the content data to be purchased, the expiration date of the card, and the password set in advance.

After inputting the name of the purchase information, card number, card expiration date, and password to the portable information terminal 50, the person transmits this information from the portable information terminal 50 to the information distributing apparatus 2.

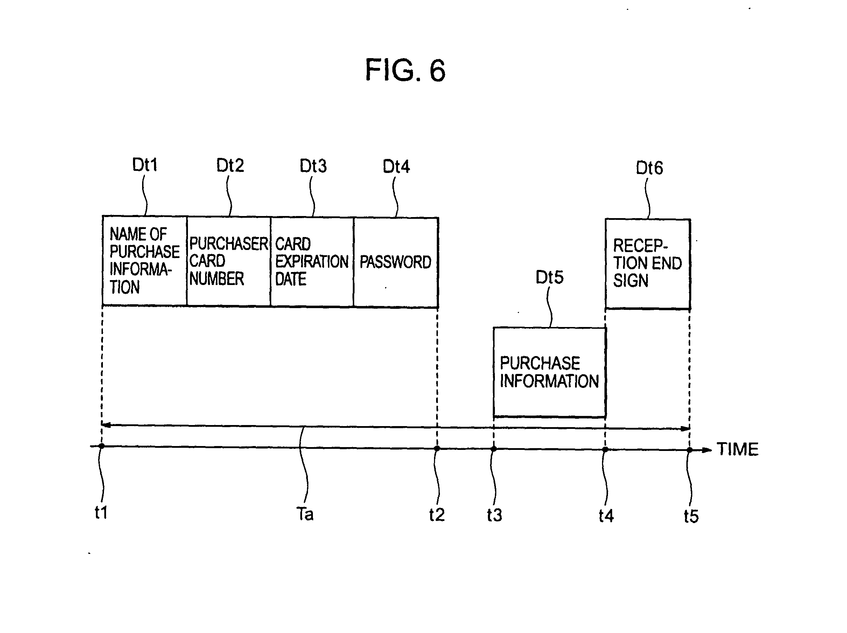

FIG. 6 is a timing chart of an example of the communication between the information distributing apparatus 2 and the portable information terminal 50 in the information distribution system 200 having the above configuration.

When assuming that the name of the purchase information Dt1, card number Dt2, card expiration date Dt3, and password Dt4 are transmitted to the information distributing apparatus 2 at the point of time t1 shown in FIG. 6, the transmission of this information is completed at the point of time t2.

At the information distributing apparatus 2, at the point of time t2, when the data Dt1 to Dt4 finishes being received, a simple authentication procedure explained later is carried out based on the purchaser information comprised of the card number Dt2, card expiration date Dt3, and password Dt4. When it is authenticated, the content data in accordance with the name of the purchase information Dt1 is read from the storage device 9.

When the preparations for transmission are completed at the point of time t3, the information distributing apparatus 2 transmits the content data Dt5 in accordance with the name of the purchase information Dt1 to the portable information terminal 50.

At the same time of completion of the transmission of the content data Dt5 to the portable information terminal 50 at the point of time t4, the reception end sign Dt6 is sent to the information distributing apparatus 2 at the portable information terminal 50.

When the information distributing apparatus 2 finishes receiving the reception end sign Dt6 at the point of time t5, the sale of the content data from the information distributing apparatus 2 to the portable information terminal 50 is completed.

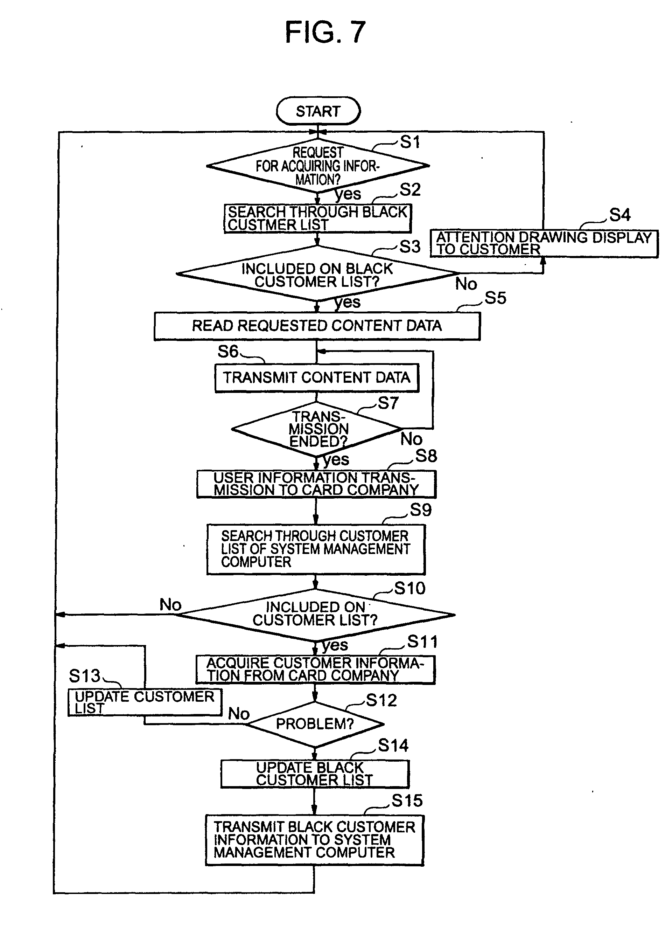

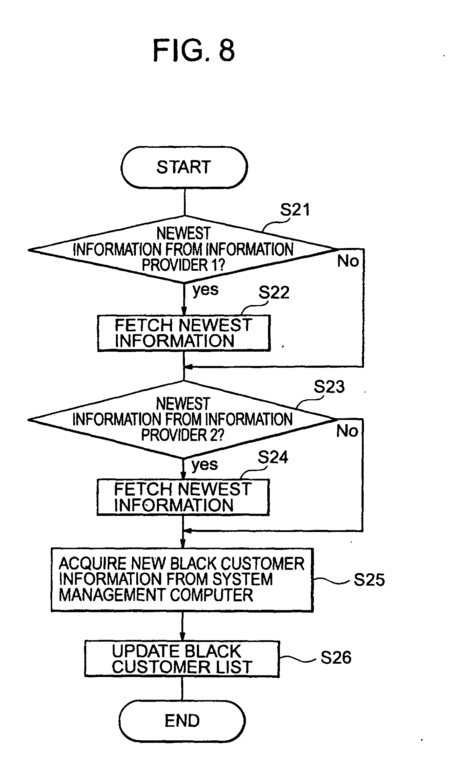

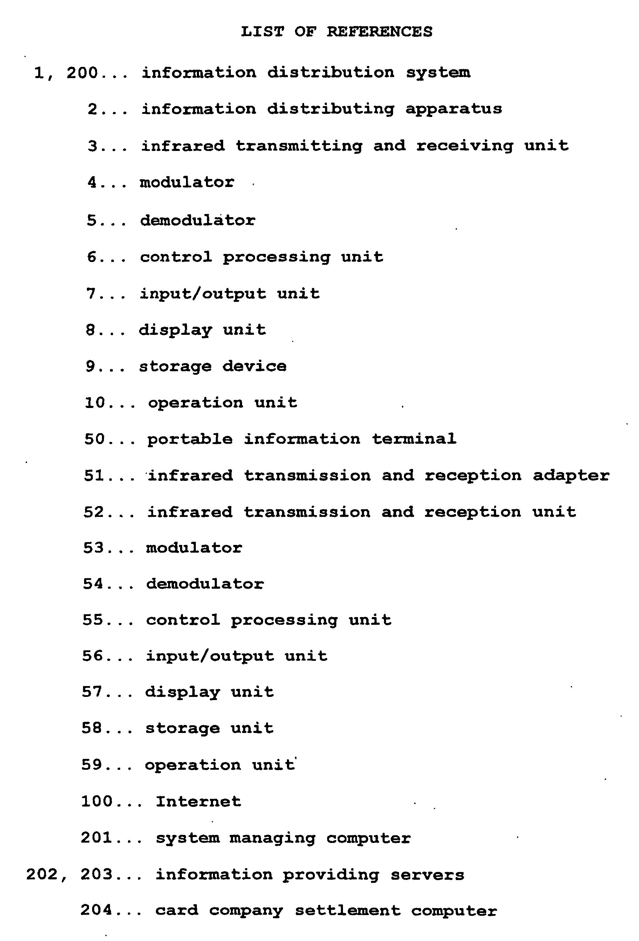

Next, an explanation will be made of an example of the processing including the above authentication procedure carried out in the information distributing apparatus 2 by referring to the flow charts shown in FIG. 7 and FIG. 8.

In FIG. 7, when the name of the purchase information Dt1, card number Dt2, card expiration date Dt3, and password Dt4 are transmitted from the portable information terminal 50 by a person who desires to acquire the information (step S1), the control processing unit 6 of the information distributing apparatus 2 searches if the person desiring purchase specified from the purchaser information comprised of the card number Dt2, card expiration date Dt3, and password Dt4 is included in the black customer list stored in advance in the storage device 9 (step S2).

The processing for searching if the person desiring purchase is included in the black customer list is the processing carried out by comparing the black customer list stored in the storage device 9 with the person desiring purchase and carried out in the information distributing apparatus 2. It is not processing for inquiring to the outside through the Internet 100, but simple authentication processing, so the processing is completed in a very short time.

Note that, this authentication processing consists just of searching through the black customer list stored in the information distributing apparatus 2 in advance. The authentication is carried out even if the user using the information distributing apparatus 2 at first is an illegitimate user recorded on the black list of the card company.

When the person desiring purchase is included on the black customer list (step S3), an attention-drawing display that "This credit card cannot be used" is displayed on the display unit 57 of the information distributing apparatus 2 (step S4).

When the person desiring purchase is not included on the black customer list (step S3), the information distributing apparatus 2 reads the content data requested for purchase from the storage device 9 (step S5) and transmits the read content data to the portable information terminal 50 by a sequence explained in FIG. 6 (step S6). When the information distributing apparatus 2 receives the reception end sign from the portable information terminal 50 and the transmission of the content data is completed (step S7), the purchaser information comprised of the card number Dt2, card expiration date Dt3, and password Dt4 is transmitted together with the charge information of the sold content data to the card company settlement computer 204 through the Internet 100.

Further, the information distributing apparatus 2 accesses the system management computer 201 through the Internet 100 and checks if the purchaser specified by the card number Dt2, card expiration date Dt3, and password Dt4 is included on the past customer list stored in the system management computer 201 (step S10). The customer list stored in this system management computer 201 is the information of good customers who legitimately purchased the content data by using the information distributing apparatus 2 in the past.

When the purchaser specified by the card number Dt2, card expiration date Dt3, and password Dt4 is included on the past customer list stored in the system management computer 201, there is no problem in this purchaser. Accordingly, the charge with respect to this purchaser is settled at the card company settlement computer 204.

On the other hand, when the purchaser specified by the purchaser information comprised of the card number Dt2, card expiration date Dt3, and password Dt4 is not included on the customer list of the system management computer 201, it is decided that this purchaser is a person who has used the information distributing apparatus 2 for the first time.

For this reason, the information of the purchaser specified by the card number Dt2, card expiration date Dt3, and password Dt4 is obtained from the card company settlement computer 204 (step S11).

When the purchaser specified by the card number Dt2, card expiration date Dt3, and password Dt4 obtained from the card company settlement computer 204 is not a bad customer recorded on the black list (step S12), the information distributing apparatus 2 adds the purchaser specified by the card number Dt2, card expiration date Dt3, and password Dt4 to the customer list of the system management computer 201 as a new good customer (step S13).

On the other hand, when the purchaser specified by the card number Dt2, card expiration date Dt3, and password Dt4 obtained from the card company settlement computer 204 is a black customer recorded on the black list (step S12), the information distributing apparatus 2 adds this customer information to the black customer list stored in the information distributing apparatus 2 (step S13).

Further, the information distributing apparatus 2 transmits the added black customer information to the system management computer 201 (step S15).

The system management computer 201 transmits the black customer information transmitted from the information distributing apparatus 2 to the other information distributing apparatuses 2. The other information distributing apparatuses 2 update the black customer list information stored by themselves

In a waiting state where there is no access from the portable information terminal 50, the control processing unit 6 of the information distributing apparatus 2 continuously or periodically performs the processing as shown in for example FIG. 8.

Namely, it accesses the information provision server 202 of the information provision company 1, confirms if there is no newest content data (step S21), fetches any newest content data when this content data exists, and stores this in the storage device 9 (step S22).

Similarly, it accesses the information provision server 203 of the information provision company 2, confirms if there is no newest content data (step S21), fetches any newest content data when this content data exists, and stores this in the storage device 9 (step S22).

By the above processing, the content data stored in the information distributing apparatus 2 is constantly updated to the newest one.

Further, the information distributing apparatus 2 obtains the black customer information transmitted from the system management computer 201 (step S25), and updates the black customer list information stored by itself (step S26). Note that, a configuration wherein the system management computer 201 does not transmit the newly got black customer information to the information distributing apparatuses 2, but each information distributing apparatus 2 accesses the system management computer 201 to obtain new black customer information can be employed.

As described above, according to the present embodiment, when there is a purchase request of the content data from a portable information terminal 50, the information distributing apparatus 2 only refers to the black customer list information held by itself for the authentication of the customer and does not access the Internet 100, so an extremely quick authentication becomes possible and, as a result, it becomes possible to quickly provide relatively large volume of data.

When the purchaser is a first customer, it provides the content data before performing the detailed authentication, so there is a possibility of illegitimate usage, but when the purchaser once engaged in illegitimate usage, the black customer lists of all information distributing apparatuses 2 of the information distribution system 200 are updated, so it becomes impossible to use the information distribution system 200 again. For this reason, the occurrence of illegitimate users can be kept to a minimum. Particularly in a case where content data obtained by digitizing the content of periodicals such as newspaper and magazines is to be sold, the usage fee is considered to be relatively low amount within a range from several tens of yen to several hundreds of yen, therefore if the occurrence of illegitimate users can be kept to the minimum, the amount of damages can also be minimized.

In the above embodiment, a configuration where a list of information of good customer who purchased the content data from the information distributing apparatus 2 was centrally managed at the system management computer 201 and where a information distributing apparatus 2 referred to this good customer information list each time after selling the content data was employed. At this time, it is also possible to employ a configuration wherein the usage information of the customers is added to the good customer information list. For example, if the information content purchased by a customer, number of times of usage of the customer, the total amount of the purchase sum, etc. are managed, this information can be utilized for service to the customer. Specifically, a service such as discounting the usage fee in accordance with the number of times of usage of the customer, purchase sum, etc. can be considered.

Further, in the above embodiment, a configuration centrally managing the good customer information list by the system management computer 201 was employed, but it is also possible to employ a configuration wherein the good customer information list is also managed at the information distributing apparatuses 2.

Further, in the information distribution system 200 according to the present embodiment, together with the sale of the content data, the advertisement information can be added to the content data and provided.

For example, it is possible to transmit the advertisement information from the system management computer 201 to the information distributing apparatus 2, add this advertisement information to the content data at the information distributing apparatus 2, and provide this to the purchaser or transmit the content data with the advertisement information added thereto from the information provision servers 202 and 203 to the information distributing apparatus 2 and provide the content data added with this advertisement information to the purchaser by the information distributing apparatus 2.

Also, a configuration wherein the advertisement information is directly input to the information distributing apparatus 2 and provided without going through the Internet 100 and wherein the advertisement information is input from the portable information terminal 50 to the information distributing apparatus 2 can be employed.

Particularly, when the system manager of the information distribution system 200 adds the advertisement information from the system management computer 201 and the information distribution system 200, it is possible to select the advertisement information and distribute this for every area where the information distributing apparatus 2 is disposed, so the provision of the advertisement information closely connected to the area becomes possible.

The present invention is not limited to the above embodiments.

In the above embodiments, the case where the purchaser performed the payment for the content data by a credit card was shown, but the present invention can also be applied to the case where payment is carried out by another means. The present invention can also be applied to the case where the provision of the content data is received without paying a price. Namely, the present invention can be applied to any system capable of acquiring a source of information for updating the black customer list stored in the information distributing apparatus in advance through the network by verifying the user specified by the user information after providing the content data.

### INDUSTRIAL APPLICABILITY

According to the present invention, it becomes possible to quickly provide a relatively large volume of content data to a portable type information terminal without using a wireless system. As a result, the influence of electromagnetic waves due to the usage of a mobile phone for a long time in the public can be suppressed. In addition, the convenience of acquisition of information can be remarkably improved along with the increase of the places where information distributing apparatuses are installed.

## Claims

1. An information distributing apparatus having:
a data transmitting and receiving means capable of transmitting and receiving data with a portable information terminal carried by an information requester desiring the provision of content data,
a content data storing means for storing profitable content data in advance,
a black customer list storing means for storing black customer list information for stopping the provision of said content data in advance, and
a processing means for comparing user information acquired from said portable information terminal with said black customer list information, providing requested content data to said portable information terminal through said data transmitting and receiving means when it is decided that there is no information coinciding with said user information in said black customer list information, checking the user specified by said user information based on check information from the outside after providing the content data, and adding said user information to said black customer list information when a negative check result is obtained for the user specified by said user information.

2. An information distribution system as set forth in claim 1, wherein said data transmitting and receiving means transmits and receives data by non-contact using infrared rays.

3. An information distribution system as set forth in claim 1, which adds advertisement information to the content data for provision.

4. An information distribution system as set forth in claim 1, wherein the content data stored in said content data storing means is obtained through a communication network.

5. An information distribution system having:
a portable information terminal which is provided with a data transmitting and receiving means capable of transmitting and receiving data without contact by an optical signal and a storing means for storing the data to be transmitted and the received data and
a data distributing apparatus provided with a data transmitting and receiving means capable of transmitting and receiving data with the data transmitting and receiving means of said portable information terminal and a storing means for storing the content data received through a network and provides content data in accordance with a request from said portable information terminal.

6. An information distribution system as set forth in claim 5, wherein the data transmitting and receiving means of said portable information terminal and said information distributing apparatus transmit and receive the data by an infrared signal.

7. An information distribution system as set forth in claim 5, wherein Said portable information terminal is further provided with a wireless communicating means capable of accessing a network via a telephone line.

8. An information distribution system as set forth in claim 7, wherein the data transmitting and receiving means of said portable information terminal can receive the data at a higher speed than said wireless communicating means.

9. An information distribution system as set forth in claim 5, wherein the data transmitting and receiving means of said portable information terminal can be attached to and detached from the body of the portable information terminal.

10. An information distribution system having at least one information distributing apparatus provided with a data transmitting and receiving means for transmitting and receiving data with a data transmitting and receiving means of a portable information terminal provided with a data transmitting and receiving means for transmitting and receiving data and a storing means for storing the data to be transmitted and received data and a content data storing means for storing the content data in advance and providing content data requested from said portable information terminal through said data transmitting and receiving means,
said information distributing apparatus having:
a black customer list storing means for storing in advance black customer list information for which said content data should not be provided and
a processing means for comparing user information acquired from said information requester with said black customer list information, providing requested content data to said portable information terminal through said data transmitting and receiving means when it is decided that there is no information coinciding with said user information in said black customer list information, checking the user specified by said user information based on check information from the outside after providing the content data, and adding said user information to said black customer list information when a negative check result is obtained for the user specified by said user information.

11. An information distribution system as set forth in claim 10, wherein the data transmitting and receiving means of said portable information terminal and said information distributing apparatus transmit and receive the data by an infrared signal.

12. An information distribution system as set forth in claim 10, wherein the data transmitting and receiving means of said portable information terminal can be attached to and detached from the body of the portable information terminal.

13. An information distribution system as set forth in claim 10, further having a managing apparatus connected by a plurality of said information distributing apparatuses and network and managing the information distributing apparatuses.

14. An information distribution system as set forth in claim 13, wherein
said information distributing apparatuses transmit user information of negative check results to the managing apparatus and
said managing apparatus transmits the received user information of the negative check results to other information distributing apparatuses.

15. An information distribution system as set forth in claim 13, wherein
said managing apparatus centrally manages user information judged to be of legitimate users, and
said information distributing apparatuses refers to legitimate user information centrally managed by said managing apparatus at the time of a check by said second authentication means.

16. An information distribution system as set forth in claim 10, wherein at least one information providing apparatus providing content data to the information distributing apparatuses is connected by a network to said information distributing apparatuses.

17. An information distribution system as set forth in claim 10, wherein a settlement apparatus for settling charges for content data provided by said information distributing apparatuses is connected by a network to said information distributing apparatuses.

18. An information distribution system as set forth in claim 17, wherein said settlement apparatus transmits information on whether users specified by user information transmitted from said information distributing apparatuses are legitimate users to said information distributing apparatuses.

19. An information distribution system as set forth in claim 10, wherein said information distributing apparatuses add advertisement information to the content data for provision.

20. An information distribution method for providing the related content data to the portable information terminal from the information distributing apparatus holding the content data in advance,
said information distribution method comprised of:
a step of having said information distributing apparatus acquire a request of provision from a portable information terminal carried by an information requester desiring provision of the content data and user information,
a step of comparing said acquired user information with black customer list information stored in advance in said information distributing apparatus prepared to which the content data should not be provided,
a step of providing the requested content data to said portable information terminal by said information distributing apparatus when it is decided that there is no information coinciding with said user information in said black customer list information,
a step of checking whether or not the user specified by said user information is a legitimate user by said information distributing apparatus after providing the content data, and
a step of adding said user information to said black customer list information by said information distributing apparatus when a negative check result is obtained.

21. An information distribution method as set forth in claim 20, comprising transmitting and receiving data between said information distributing apparatus and a portable information terminal by non-contact using an infrared signal.
